# EUROPÄISCHE PATENTSCHRIFT

(11) **EP 2 724 449 B1**
(45) Veröffentlichungstag und Bekanntmachung des Hinweises auf die Patenterteilung: **15.07.2015**
(21) Anmeldenummer: 12743439.7
(22) Anmeldetag: 30.07.2012
(51) Int. Cl.: H02K 7/18, H02K 1/30

(54) **Schiffsantrieb**
Ship drive
Propulsion navale

(30) Priorität: 10.08.2011 DE 102011080751
(43) Veröffentlichungstag der Anmeldung: 30.04.2014
(73) Patentinhaber: Siemens Aktiengesellschaft, 80333 München (DE)
(72) Erfinder: TEFERT, Peter, 13407 Berlin (DE); BALZER, Christoph, 10437 Berlin (DE); VOGELEY, Peter, 14612 Falkensee (DE)
(86) Internationale Anmeldenummer: PCT/EP2012/064861
(87) Internationale Veröffentlichungsnummer: WO 2013/020848

(56) Entgegenhaltungen:
- DE-A1- 10 327 292
- FR-A1- 2 435 145
- US-A- 4 143 457
- US-A1- 2003 228 188

## Beschreibung

Die Erfindung betrifft einen Schiffsantrieb mit einer Hauptmaschine, die über eine erste und eine zweite Propellerwelle ein Moment an einen Propeller überträgt,
- wobei die erste Propellerwelle in ihrem Endbereich einen ersten Flansch aufweist, der den Außenmantel der ersten Propellerwelle in Radialrichtung nach außen überragt,
- wobei die zweite Propellerwelle in Axialrichtung der ersten Propellerwelle benachbart ist und in ihrem der ersten Propellerwelle zugewandten Endbereich einen zweiten Flansch aufweist, der den Außenmantel der zweiten Propellerwelle in Radialrichtung nach außen überragt.

Derartige Schiffsantriebe sind allgemein bekannt.

Aus der US 2003/0228188 A1 ist eine rotierende Maschine bekannt, die zwei Wellen aufweist. Die beiden Wellen weisen jeweils einen Flansch auf, der den Außenmantel der jeweiligen Welle in Radialrichtung nach außen überragt. Ein Steg eines Traggerüsts erstreckt sich in den Zwischenraum zwischen den beiden Flanschen und ist mit den beiden Flanschen fest verbunden. Das Traggerüst trägt das aktive Rotorteil einer elektrischen Maschine. Das aktive Rotorteil ist von einem Stator radial außen umgeben. Der Stator ist mit einem den Stator, das aktive Rotorteil, das Traggerüst und die Flansche umgebenden Gehäuse fest verbunden.

Aus der US 4, 143, 457 A ist eine elektrische Maschine bekannt, bei welcher der Rotor der elektrischen Maschine auf einem gitterförmigen Traggerüst angeordnet ist. Der FR 2 435 145 A ist ein im wesentlichen gleich gelagerter Offenbarungsgehalt zu entnehmen.

Das Dokument DE 103 27 292 offenbart eine elektrische Maschine für Unter- und Überwasserschiffe.

Elektrogroßantriebe werden beispielsweise als Antriebsmotören für Schiffe verwendet. Ein in der Praxis auftretendes Problem derartiger Elektrogroßantriebe besteht darin, dass für die Montage des Rotors auf der üblicherweise langen und schweren Propellerwelle ein hoher Kosten- und Logistikaufwand notwendig ist. Die einzelnen Komponenten des Rotors werden oftmals an verschiedenen Fertigungsstandorten, zu welchen eine Elektromotorenfabrik und eine Propellerfabrik gehören, hergestellt und dann zu einem anderen Standort transportiert, an welchem ein Zusammenbau der Komponenten erfolgt. Dabei entstehen abgesehen von den Kosten einer Anpassfertigung auch hohe Kosten für den Transport der einzelnen Komponenten. Weitere Probleme derartiger bekannter Elektrogroßantriebe bestehen in der Notwendigkeit künstlich vergrößerter teurer Schmiedeteile, beispielsweise einer sogenannten Ballenwelle, und aufwendigen Montagearbeiten auf einer Werft. Des Weiteren verhindern unterschiedliche Flanschdurchmesser und Leistungen der von verschiedenen Herstellern gelieferten Komponenten eine Standardisierung der Komponenten und damit des gesamten Elektrogroßantriebs.

Im Rahmen des Zusammenbaus eines Elektrogroßantriebs für ein Schiff werden beispielsweise die Komponenten einer Synchronmaschine auf einer Propellerwelle zwischen zwei Flanschen der Propellerwelle installiert. Dabei werden die Pole auf eine geschrumpfte Nabenkonstruktion oder eine künstlich vergrößerte Propellerwelle (Ballenwelle) geschraubt.

Die Aufgabe der Erfindung besteht darin, einen Schiffsantrieb anzugeben, bei dem die vorstehend beschriebenen Nachteile reduziert sind.

Diese Aufgabe wird durch einen Schiffsantrieb mit den im Anspruch 1 angegebenen Merkmalen gelöst. Erfindungsgemäß wird ein Schiffsantrieb der eingangs genannten Art dadurch weiter ausgestaltet,
- dass ein Steg eines gitterförmigen Traggerüsts sich in den Zwischenraum zwischen den beiden Flanschen erstreckt und mit den beiden Flanschen fest verbunden ist,
- wobei das Traggerüst das aktive Rotorteil einer elektrischen Maschine trägt,
- wobei das aktive Rotorteil von einem Stator radial außen umgeben ist,
- wobei der Stator mit einem den Stator, das aktive Rotorteil, das Traggerüst und die Flansche umgebenden Gehäuse fest verbunden ist.

Vorteilhafte Ausgestaltungen und Weiterbildungen eines Schiffsantriebs mit den im Anspruch 1 angegebenen Merkmalen sind Gegenstand der abhängigen Ansprüche 2 bis 7.

Die Vorteile der Erfindung bestehen im Wesentlichen darin, dass der Zusammenbau des Rotors und damit auch des gesamten Schiffsantriebs vereinfacht ist und der beim Stand der Technik anfallende hohe Kosten- und Logistikaufwand reduziert ist.

Weitere vorteilhafte Eigenschaften der Erfindung ergeben sich aus deren nachfolgender Erläuterung anhand der Zeichnungen.
Es zeigt
- FIG 1: eine perspektivische Skizze zur Veranschaulichung eines Rotors gemäß einem Ausführungsbeispiel für die Erfindung,
- FIG 2: eine perspektivische Ansicht eines vertikal geteilt ausgeführten Gehäuses, in welchem ein Elektrogroßantrieb angeordnet ist, und
- FIG 3: eine Schnittdarstellung des in der Figur 2 gezeigten Gehäuses mit darin angeordnetem Elektrogroßantrieb.

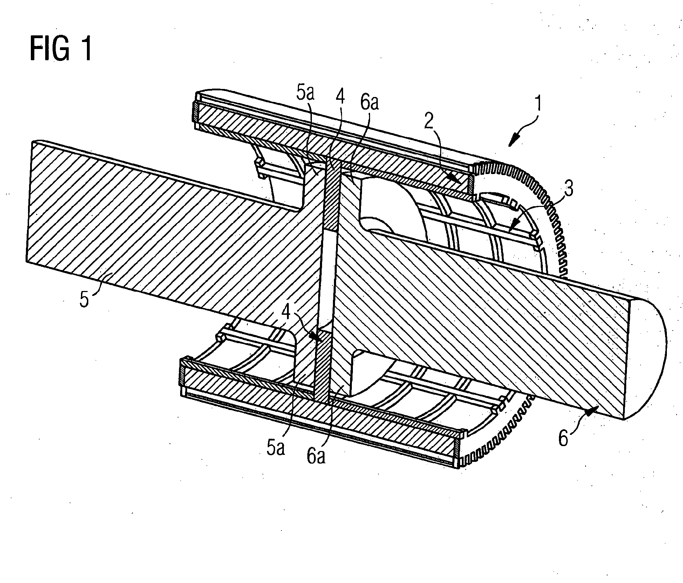

Die FIG 1 zeigt eine perspektivische Skizze zur Veranschaulichung eines Rotors gemäß einem Ausführungsbeispiel für die Erfindung. Der dargestellte Rotor 1 weist eine erste Welle 5, eine zweite Welle 6, ein gitterförmiges Traggerüst 3 und ein Blechpaket 2 auf. Die erste Welle 5 weist in ihrem der zweiten Welle 6 zugewandten Endbereich einen ersten Flansch 5a auf, der den Außenmantel der ersten Welle radial nach außen überragt. Die zweite Welle 6 weist in ihrem der ersten Welle 5 zugewandten Endbereich einen zweiten Flansch 6a auf, der den Außenmantel der zweiten Welle radial nach außen überragt.

Das gitterförmige Traggerüst 3 erstreckt sich zylinderförmig um die beiden Wellen und dient beim gezeigten Ausführungsbeispiel u.a. als Packvorrichtung für ein Käfigblechpaket 2 des Rotors. Des Weiteren weist das gitterförmige Traggerüst 3 einen sich radial nach innen erstreckenden Steg 4 auf, der sich in den Zwischenraum zwischen den Flanschen 5a, 6a der beiden benachbarten Wellen 5, 6 erstreckt und mit den genannten Flanschen fest verbunden ist. Zu diesem Zweck weisen die genannten Flansche und der Steg ein übereinstimmendes Bohrbild auf, so dass zu einer festen Verbindung des Steges 4 mit den beiden Flanschen 5a und 6a Bolzen durch die genannten Bohrungen geführt werden können.

Folglich ist beim gezeigten Ausführungsbeispiel das gatterförmige Traggerüst 3 mittels des Steges 4, welcher zwischen den Flanschen 5a und 6a der beiden Wellen 5 und 6 unter Verwendung von Bolzen befestigt ist, drehfest mit den beiden Wellen 5 und 6 verbunden. Dies hat zur Folge, dass sich bei einem Drehen der Wellen das Traggerüst und die daran befestigten weiteren Komponenten mitdrehen. Aufgrund dieser festen Verbindung des Steges des Traggerüstes mit den Flanschen der beiden Wellen weist der beschriebene Rotor im Betrieb eine hohe mechanische Stabilität auf. Des Weiteren ist auf Grund dieser festen Verbindung auch eine feste Verbindung der beiden Wellen miteinander sichergestellt.

Gemäß der dargestellten Ausführungsform handelt es sich bei dem Elektrogroßantrieb um eine Asynchronmaschine, wobei deren aktives Rotorteil, bei dem es sich um ein verspanntes Käfigblechpaket der Asynchronmaschine handelt, auf das Traggerüst 3 aufgeschweißt ist. Gemäß einer zweiten Ausführungsform handelt es sich bei dem Elektrogroßantrieb um eine Synchronmaschine, wobei deren aktives Rotorteil, bei dem es sich ebenfalls um ein verspanntes Käfigblechpaket handelt, auf das Traggerüst 3 aufgeschweißt ist. Gemäß einer dritten Ausführungsform handelt es sich bei dem Elektrogroßantrieb um eine Schenkelpolmaschine, wobei deren aktives Rotorteil, bei dem es sich um die Pole bzw. Polsysteme und ein geeignetes Polrad der Schenkelpolmaschine handelt, auf das Traggerüst 3 aufgeschraubt sind. Gemäß einer vierten Ausführungsform handelt es sich bei dem Elektrogroßantrieb um eine permanenterregte Synchronmaschine, wobei deren aktives Bauteil, bei dem es sich ebenfalls um die Pole bzw. Polsysteme der Synchronmaschine handelt, auf das Traggerüst aufgeschraubt sind bzw. bei dem die Magnete in ein verspanntes Blechpaket eingeschoben (oberflächennah vergraben) sind, das auf das Traggerüst 3 aufgeschweißt ist.

Der Rotor ist derart dimensioniert, dass der Innendurchmesser der die Wellen umgebenden Komponenten des Traggerüsts bzw. der von diesem gehaltenen Komponenten größer ist als der Flanschdurchmesser der Wellen, bei denen es sich vorzugsweise um Propellerwellen eines Schiffes handelt. Die beiden seitlichen Abschnitte, d.h. die in Axialrichtung der Wellen über die Bereiche der Flansche hinausragenden Bereiche des Traggerüsts und der von diesem gehaltenen Komponenten ragen über beide Flansche freitragend hinaus.

Wie bereits oben ausgeführt wurde weist der Steg 4 das gleiche Bohrbild auf wie die Flansche der Wellen. Er ist wie eine Art Distanzscheibe zwischen die beiden Flansche eingesetzt und mit diesen fest verbunden.

Bei einem Rotor mit den vorstehend beschriebenen Merkmalen hat der Steg 4 die Aufgabe, die von der elektrischen Maschine eingeleiteten Momente (Booster) und die ausgeleiteten Momente (Generator) zu übertragen.

Weitere Vorteile der Erfindung bestehen darin, dass eine robuste Asynchronmaschine, wie sie derzeit am Markt bevorzugt ist, kostengünstig gebaut werden kann. Unter anderem kann dabei auch ein Polrad, wie es bei herkömmlichen Asynchronmaschinen notwendig ist, eingespart werden. Des Weiteren muss der Steg lediglich die Drehmomente übertragen, die von der elektrischen Maschine erzeugt bzw. abgenommen werden. Das Mo-, ment der Hauptmaschine wird über die Bolzen übertragen, die zur Fixierung des Steges zwischen den beiden Flanschen der Wellen vorgesehen sind. Ferner entfallen Logistik und Transportprobleme, die im Falle einer Montage von Großkomponenten auftreten würden, da ein erfindungsgemäßer kompletter Rotor auf einer Werft montiert werden kann.

Ein weiterer Vorteil besteht darin, dass die beiden Wellen nicht exakt aufeinander abgestimmt sein müssen. Es müssen lediglich die Bolzen, die durch die Bohrungen der Flansche geführt sind, um die Breite des Steges verlängert werden. Schließlich erfordert die Asynchronmaschine keinen Schaltungsaufwand. Kommt gemäß einer vorteilhaften Ausgestaltung der Erfindung ein mehrteiliges Gehäuse zum Einsatz, dann kann im Falle einer horizontalen Teilung des Gehäuses das Unterteil vorinstalliert werden und im Falle einer vertikalen Teilung des Gehäuses das Gehäuse von links und von rechts an die Motorkomponenten herangeführt werden. Die Verwendung eines mehrteiligen Gehäuses vereinfacht auch eine spätere Durchführung von Servicemaßnahmen. Ferner ermöglicht der Gegenstand der vorliegenden Erfindung eine flexible Montageplanung.

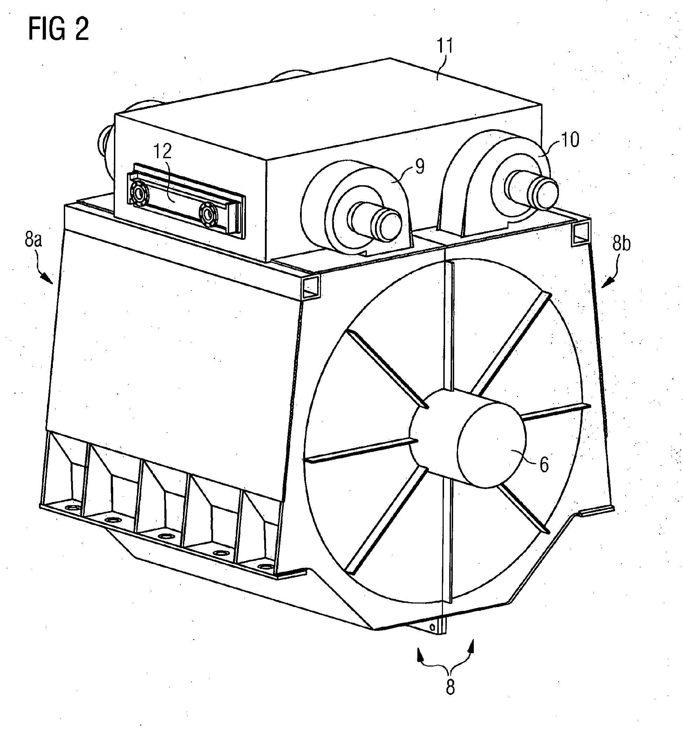

In der FIG 2 ist eine perspektivische Ansicht eines vertikal geteilt ausgeführten Gehäuses 8 gezeigt, in welchem ein Elektrogroßantrieb angeordnet ist. Das dargestellte Gehäuse 8 weist eine erste Gehäusehälfte 8a und eine zweite Gehäusehälfte 8b auf, die beispielsweise unter Verwendung von in der Figur 2 nicht dargestellten Bolzen fest miteinander verbunden sind. Die in der FIG 1 gezeigte zweite Welle 6 ist durch die Vorderwand des Gehäuses 8 nach außen hindurchgeführt. Ebenso ragt die in der FIG 1 gezeigte erste Welle 5 durch die Rückwand des Gehäuses 8 nach außen hindurch. Oben auf das Gehäuse aufgesetzt ist ein weiteres Gehäuse 11, innerhalb dessen ein Luftwasserkühler 12 positioniert ist, sowie Lüftermotoren 9 und 10, die aus dem weiteren Gehäuse 11 nach vorne und hinten herausragen.

Ein Vorteil einer derartigen Ausbildung des Gehäuses besteht darin, dass der Transport, der Zusammenbau und auch der spätere Service des Elektrogroßantriebs erleichtert sind. Beim Zusammenbau des Gehäuses 8 können die beiden Gehäusehälften 8a und 8b in der FIG 2 von links bzw. rechts um die im Inneren befindlichen weiteren Komponenten des Großantriebs herangeführt und dann miteinander verbunden werden.

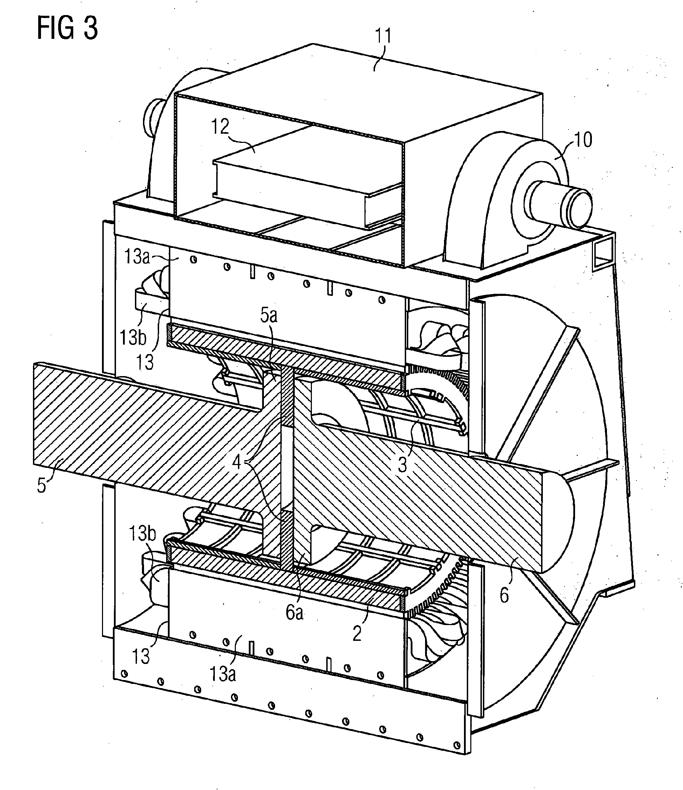

Die FIG 3 zeigt eine Schnittdarstellung des in der FIG 2 gezeigten Gehäuses mit darin angeordnetem Großantrieb. Dieser weist außer dem bereits in der FIG 1 gezeigten Rotor 1 auch einen Stator 13 auf, der mit dem Gehäuse 8 fest verbunden ist und unter anderem ein Statorblechpaket 13a und an dem Statorblechpaket in Axialrichtung bzw. stirnseitig aus diesem hinausragende Wickelköpfe 13b aufweist. Radial innerhalb dieses Stators 13 und durch einen Luftspalt von diesem getrennt ist der in der Figur 1 gezeigte Rotor angeordnet, zu welchem das Traggerüst 3, das Blechpaket 2, der Steg 4, die erste Welle 5, die zweite Welle 6 und die Elektromagnete 7 gehören.

## Patentansprüche

1. Schiffsantrieb mit einer Hauptmaschine, die über eine erste und eine zweite Propellerwelle (5, 6) ein Moment an einen Propeller überträgt,
- wobei die erste Propellerwelle (5) in ihrem Endbereich einen ersten Flansch (5a) aufweist, der den Außenmantel der ersten Propellerwelle (5) in Radialrichtung nach außen überragt,
- wobei die zweite Propellerwelle (6) in Axialrichtung der ersten Propellerwelle (5) benachbart ist und in ihrem der ersten Propellerwelle (5) zugewandten Endbereich einen zweiten Flansch (6a) aufweist, der den Außenmantel der zweiten Propellerwelle (6) in Radialrichtung nach außen überragt,
- wobei ein Steg (4) eines gitterförmigen Traggerüsts (3) sich in den Zwischenraum zwischen den beiden Flanschen (5a, 6a) erstreckt und mit den beiden Flanschen fest verbunden ist,
- wobei das Traggerüst (3) das aktive Rotorteil (2) einer elektrischen Maschine trägt,
- wobei das aktive Rotorteil (2) von einem Stator (13) radial außen umgeben ist,
- wobei der Stator (13) mit einem den Stator (13), das aktive Rotorteil (2), das Traggerüst (3) und die Flansche (5a, 6a) umgebenden Gehäuse fest verbunden ist.

2. Schiffsantrieb nach Anspruch 1, **dadurch gekennzeichnet, dass** der Steg (4) mit den beiden Flanschen (5a,6a) unter Verwendung von Bolzen fest verbunden ist, wobei diese Bolzen durch Bohrungen der Flansche und des Steges geführt sind.

3. Schiffsantrieb nach Anspruch 1 oder 2, **dadurch gekennzeichnet, dass** das gitterförmige Traggerüst (3) mit einem Käfigblechpaket einer Asynchronmaschine oder einer Synchronmaschine fest verbunden ist.

4. Schiffsantrieb nach Anspruch 3, **dadurch gekennzeichnet, dass** das gitterförmige Traggerüst (3) als Packvorrichtung für das Käfigblechpaket dient.

5. Schiffsantrieb nach Anspruch 1 oder 2, **dadurch gekennzeichnet, dass** das gitterförmige Traggerüst (3) mit den Polen einer Schenkelpolmaschine oder einer permanenterregten Synchronmaschine fest verbunden ist.

6. Schiffsantrieb nach einem der vorhergehenden Ansprüche, **dadurch gekennzeichnet, dass** der Stator und der Rotor ein gemeinsames Gehäuse (8) aufweisen.

7. Schiffsantrieb nach Anspruch 6, **dadurch gekennzeichnet, dass** das Gehäuse (8) horizontal und/oder vertikal geteilt ausgeführt ist.

## Claims

1. Ship propulsion system with a main machine, which transmits a torque to a propeller by way of a first and a second propeller shaft (5, 6),
- wherein the first propeller shaft (5) has a first flange (5a) in its end region, said first flange protruding outwards in the radial direction beyond the outer casing of the first propeller shaft (5),
- wherein the second propeller shaft (6) is adjacent to the first propeller shaft (5) in the axial direction and has a second flange (6a) in its end region facing the first propeller shaft, said second flange protruding outwards in a radial direction beyond the outer casing of the second propeller shaft (6),
- wherein a web (4) of a grid-type support frame (3) extends into the intermediate space between the two flanges (5a, 6a) and is firmly connected to the two flanges,
- wherein the support frame (3) supports the active rotor part (2) of an electric machine,
- wherein the active rotor part (2) is surrounded radially outwards by a stator (13),
- wherein the stator (13) is firmly connected to a housing surrounding the stator (13), the active rotor part (2), the support frame (3) and the flange (5a, 6a).

2. Ship propulsion according to claim 1, **characterised in that** the web (4) is firmly connected to the two flanges (5a, 6a) using bolts, wherein these bolts are guided through holes drilled in the flange and the web.

3. Ship propulsion according to claim 1 or 2, **characterised in that** the grid-type support frame (3) is firmly connected to a cage laminated core of an asynchronous machine or a synchronous machine.

4. Ship propulsion according to claim 3, **characterised in that** the grid-type support frame (3) is used as a packaging device for the cage laminated core.

5. Ship propulsion according to claim 1 or 2, **characterised in that** the grid-type support frame (3) is firmly connected to the poles of a salient pole machine or a permanently-excited synchronous machine.

6. Ship propulsion according to one of the preceding claims, **characterised in that** the stator and the rotor have a shared housing (8).

7. Ship propulsion according to claim 6, **characterised in that** the housing (8) is embodied to be divided horizontally and/or vertically.

## Revendications

1. Propulseur de navire, comprenant une machine principale, qui transmet un couple à une hélice par un premier et par un deuxième arbres ( 5, 6 ) d'hélice,
- dans lequel le premier arbre ( 5 ) d'hélice a, dans sa partie de bout, une première bride ( 5a ), qui dépasse vers l'extérieur dans la direction radiale de la surface latérale extérieure du premier arbre ( 5 ) d'hélice,
- dans lequel le deuxième arbre ( 6 ) d'hélice est voisin, dans la direction axiale, du premier arbre ( 5 ) d'hélice et a, dans sa partie de bout tournée vers le premier arbre ( 5 ) d'hélice, une deuxième bride ( 6a ), qui dépasse vers l'extérieur dans la direction radiale de la surface latérale extérieure du deuxième arbre ( 6 ) d'hélice,
- dans lequel une traverse ( 4 ) d'une ossature support ( 3 ) en forme de treillis s'étend dans l'espace intermédiaire entre les deux brides ( 5a, 6a ) et est reliée fixement aux deux brides,
- dans lequel l'ossature support ( 3 ) porte la partie ( 2 ) rotorique active d'un moteur électrique,
- dans lequel la partie ( 2 ) rotorique active est entourée à l'extérieur radialement d'un stator ( 13 ),
- dans lequel le stator ( 13 ) est relié fixement à une enveloppe entourant le stator ( 13 ), la partie ( 2 ) rotorique active, l'ossature support ( 3 ) et les brides ( 5a, 6a ).

2. Propulseur de navire suivant la revendication 1, **caractérisé en ce que** la traverse ( 4 ) est reliée rigidement aux deux brides en utilisant des boulons, ces boulons passant dans des trous des brides et de la traverse.

3. Propulseur de navire suivant la revendication 1 ou 2, **caractérisé en ce que** l'ossature support ( 3 ) en forme de treillis est reliée rigidement à un paquet de tôles de cage d'un moteur asynchrone ou d'un moteur synchrone.

4. Propulseur de navire suivant la revendication 3, **caractérisé en ce que** l'ossature support ( 3 ) en forme de treillis sert de dispositif de serrage du paquet de tôles de cage.

5. Propulseur de navire suivant la revendication 1 ou 2, **caractérisé en ce que** l'ossature support ( 3 ) en forme de treillis est reliée fixement aux pôles d'un moteur à pôles saillants ou d'un moteur synchrone à excitation permanente.

6. Propulseur de navire suivant l'une des revendications précédentes, **caractérisé en ce que** le stator et le rotor ont une enveloppe ( 8 ) commune.

7. Propulseur de navire suivant la revendication 6, **caractérisé en ce que** l'enveloppe ( 8 ) est réalisée en étant séparée horizontalement et/ou verticalement.
